# EUROPÄISCHE PATENTSCHRIFT

(11) **EP 2 685 333 B1**
(45) Veröffentlichungstag und Bekanntmachung des Hinweises auf die Patenterteilung: **25.09.2019**
(21) Anmeldenummer: 13175024.2
(22) Anmeldetag: 04.07.2013
(51) Int. Cl.: G06K 9/32, H04N 7/18, G05B 19/402

(54) **Verfahren zur Steuerung eines Werkzeuges**
Method for controlling a tool
Procédé destiné à la commande d' un outil

(30) Priorität: 09.07.2012 DE 102012106156
(43) Veröffentlichungstag der Anmeldung: 15.01.2014
(73) Patentinhaber: ACSYS Lasertechnik GmbH, 09648 Mittweida (DE)
(72) Erfinder: Jedynak, Mirko, 09648 Mittweida (DE); Kreisel, Christian, 09648 Mittweida (DE); Heinritz, Uwe, 09648 Mittweida (DE); Liebers, René, 09648 Mittweida (DE)
(74) Vertreter: Sperling, Thomas

(56) Entgegenhaltungen:
- EP-A2- 0 518 658
- WO-A1-03/107106
- US-A1- 2005 205 778

## Beschreibung

Die Erfindung betrifft ein Verfahren zur Positionssteuerung eines Werkzeuges, wobei eine Projektion von CAD-Daten als Bearbeitungskonturen, insbesondere von Schneidegeometrien, auf das Kamera-Live-Bild eines zu bearbeitenden Werkstückes erfolgt.
Das Verfahren kann auf den Gebieten der Blechbe- und -verarbeitung, der Bearbeitung von Profilen und Rohren, des Prototypenbaus und der Laserlohnfertigung Anwendung finden.

Eine bevorzugte Anwendung der Erfindung betrifft die Materialbearbeitung mittels Laserschneiden, welche im Stand der Technik in einer Vielzahl von Aspekten beschrieben ist.
Beispielsweise geht aus der DE 20 2007 015 908 U1 eine Einrichtung zum Laserschneiden hervor, welche das verbrauchte Schutzgas sammelt, in einer Filteranlage reinigt und wieder dem Laserschneideprozess zur Verfügung stellt. Aus der DE 693 00 568 T2 ist ein Verfahren zum Laserschneiden bekannt, welches in der Lage ist, mehrere gestapelte Werkstücke, insbesondere Metallbleche, gemeinsam in einem Arbeitsgang zu schneiden.
In der DE 197 16 616 C2 wird schließlich ein Verfahren zum Laserschneiden offenbart, welches den Abstand zwischen dem Laserbearbeitungskopf und dem Werkstück über den elektrischen Widerstand zwischen den beiden Komponenten bestimmt. Auch in anderen Schriften werden überwiegend die technischen Aspekte der verschiedenen Versionen des Laserschneidens ausgestaltet, wie beispielsweise die Strahlführung, die Werkstückpositionierung sowie die Verwendung von verschiedensten Materialvarianten.

In der WO 03/107106 A1 ist ein Verfahren zum Schneiden von bogenförmigen Werkstücken unter Verminderung von Verschnittmaterial offenbart, wobei ein Kamera gestütztes System benutzt wird, um Daten für ein Positioniersystem einer Schneidvorrichtung zur Verfügung zu stellen.

Dabei wird keine Laserbearbeitung vorgenommen, sondern Laser sind nur ein Hilfsmittel zur Detektierung der Formen oder Umrisse der bogenförmigen Werkstücke.

In der EP 1 342 527 wird ein Verfahren offenbart, in dem das Werkstück mit einer Kamera bildmässig erfasst wird, das Bild entzerrt und anschliessend eine gewünschte Figur zu dem erfassten Bild hinzugefügt wird. Mit Hilfe einer Laseranordnung wird die Figur anschliessend aus dem Werkstück herausgeschnitten. Die EP 1 342 527 geht von einer gekoppleten Anordnung zwischen Kamera und Laseranordnung aus.

Das Verarbeiten und insbesondere das Laserschneiden von Blechen, Rohren und Profilen erfolgt mehrheitlich ohne den Einsatz von Positioniersystemen. Die zu verarbeitenden Werkstücke werden in der Regel mit bekannten Dimensionen und definierten Startpositionen in die Maschine eingelegt, beziehungsweise an festen, definierten Anschlägen oder mit speziellen Vorrichtungen ausgerichtet. Für kleine Stückzahlen ist das Anfertigen von derartigen Hilfsvorrichtungen jedoch zeitaufwändig und teuer.

Sind an vorgefertigten Stanz- oder Prägeteilen nachträglich Ausschnitte anzubringen oder an vorgestanzten Werkstücken weitere Konturen zu schneiden, erfolgt das Ausrichten der Werkstücke meist sehr ungenau mittels Ziellaser in sichtbarer Wellenlänge.

Alternativ dazu ist im Stand der Technik eine direkte Kamerabeobachtung durch die Schneidgasdüse bekannt.

Aus der EP 0 518 658 A2 ist ein Kamera geführtes Laserschweißen bekannt, wobei der Strahlengang der Kamera durch den Laserkopf hindurch geführt ist. Dabei ist problematisch, dass die Schneidgasdüse aufgrund ihres Durchmessers von maximal 1,5 mm das Kamerabildfeld sehr stark eingrenzt.

Bei der Blechverarbeitung werden neben großen Stückzahlen oft auch kleine Losgrößen bis hin zu einzelnen Teilen hergestellt. Die Standardformate der Bleche, aus denen die Werkstücke herausgeschnitten werden, sind daher meist zu groß, um diese Bleche in einem Arbeitsgang auszunutzen. Die entstehenden Restbleche können nur mit zusätzlichen und zum Teil sehr großen Aufwendungen oder gar nicht für das Ausschneiden weiterer Werkstücke vollständig ausgenutzt werden. Für die optimale Ausnutzung der zu bearbeitenden Materialien wäre der Einsatz von Positioniersystemen wünschenswert.

Herkömmliche Nesting-Software, bei der gleiche oder unterschiedliche Geometrien verschachtelt werden, um das Material optimal auszunutzen, kann hierfür nicht, oder nur sehr eingeschränkt, genutzt werden, weil sie nicht berücksichtigt, wenn aus dem Werkstück schon bestimmte Geometrien ausgeschnitten wurden.

Weiterhin ist aus der US 2005/0205778 A1 ein Verfahren zum Lasertrimmen bekannt. Dabei wird der Strahlengang der Kamera auch durch die Laseroptik geführt und die dabei entstehenden Abbildungsfehler werden korrigiert.

Die Aufgabe der Erfindung besteht darin, das Positionieren der zu bearbeitenden Werkstücke zu vereinfachen und zu beschleunigen. Weiterhin soll eine Verbesserung der Materialausnutzung und Zeiteinsparungen bei der Einrichtung der Maschinen erreicht werden, was zu Kosteneinsparungen führt. Weiterhin soll es ermöglicht werden, die Kamera unabhängig von der Laseranordnung anzuordnen.

Die Aufgabe wird durch ein Verfahren zur Steuerung eines Werkzeuges mit den Merkmalen gemäß Patentanspruch 1 gelöst. Weiterbildungen sind in den abhängigen Patentansprüchen angegeben.

Erfindungsgemäß wird die Aufgabe insbesondere durch ein Verfahren zur Steuerung eines Werkzeuges gelöst, für das eine Referenzmatrix aus Bezugspunkten und einer Zentriermatrix aus Zentrierpunkten in einer Werkstoffbearbeitungsebene bereitgestellt wird. Das Abbild der Werkstoffbearbeitungsebene wird mit Hilfe einer Kamera als Kamerabild in der Größe des Kamerabildfeldes angefertigt. Das Verfahren wird dadurch realisiert, dass das System einmalig bei Inbetriebnahme das Kamerabild durch Abgleich mit der Referenzmatrix entzerrt, dass es die Pixelgröße des Kamerabildes durch Abgleich mit der Referenzmatrix skaliert, dass es das Kamerabild durch Abgleich mit den Zentrierpunkten auf einer Zentrierplatte zentriert und dass es eine Bearbeitungskontur auf das entzerrte, skalierte und zentrierte Abbild eines Werkstückes projiziert, Während der letzten Phase kann die Bearbeitungskontur relativ zu dem Abbild des Werkstückes oder das Abbild des Werkstückes relativ zur dargestellten Bearbeitungskontur beliebig ausgerichtet werden. Schließlich wird die Bearbeitung gestartet, wobei die Bearbeitung des Werkstückes durch das Werkzeug entlang der Bearbeitungskontur erfolgt.

Unter einer Referenzmatrix ist ganz allgemein eine Anzahl von Punkten im Raum oder in der Ebene zu verstehen, anhand derer ein Abgleich der Systeme erfolgt. Die Referenzmatrix ist für das hier beschriebene Verfahren als regelmäßiges Muster von Bezugspunkten, ausgestaltet als Kreuze, ausgebildet, welche in exakt definierten Abständen in rechtwinklig zueinander angeordneten Zeilen und Spalten angeordnet sind. Es sind aber auch andere Geometrien, beispielsweise Kreise oder Punkte möglich.

Das Muster unterliegt der Anforderung, dass das Steuerprogramm aus der Abbildung der Referenzmatrix durch die Kamera auf die Art der Verzerrung schließen kann, welcher die Abbildung unterworfen ist. Der Abbildungsfehler entsteht einerseits durch die Verzerrungen des Objektivs, speziell in den Randbereichen, und andererseits durch eine Fehlstellung der Kamera, die nicht absolut senkrecht über der Bearbeitungsfläche positioniert ist. Auf diese Weise kann auch eine, im Rahmen der Tiefenschärfe schräg stehende Kamera, die ihr Bildfeld beispielsweise direkt unter dem Laserbearbeitungskopf hat, genutzt werden. Mit der Information über den Grad der Verzerrung kann diese rechnerisch bei allen zukünftigen Abbildungen ausgeglichen werden.

Analog dazu ist die Zentriermatrix definiert als Markierung, die in exakt definierten Abständen zu zwei rechtwinklig zueinander angeordneten Seiten auf einem stabilen Träger angeordnet ist. Liegen diese Seiten fest an einem Anschlag des Materialbearbeitungstisches, ist auch die Position der Zentriermatrix relativ zum Laser exakt definiert. Im einfachsten Fall besteht die Zentriermatrix nur aus einem einzelnen Zentrierpunkt, gemäß bevorzugter Ausgestaltungen der Erfindung ist die Zentriermatrix als Anordnung von drei Zentrierpunkten ausgebildet.
Die Zentrierpunkte sind dazu angebracht, um die Beziehung des Laserbearbeitungskopfes zur Kamera herzustellen, das bedeutet, um den Abstand von Kamera-Mittelpunkt zu Bearbeitungskopf-Mittelpunkt und die Verdrehung der x-y-Achsen der Kamera zu den x-y-Bearbeitungsachsen der Maschine zu messen. Somit kann durch die Abbildung dieser Punkte der Mittelpunkt des Kamerabildes auf dem des Lasers zentriert werden.
Während die Objektiv-Kamera-Korrektur meist nur einmal vorgenommen werden muss, kann es beispielsweise beim Anstoßen des Bearbeitungskopfes oder der Kamera an ein Werkstück, wobei ein ganz leichtes Berühren je nach Auflösung und gewünschter Genauigkeit schon genügen kann, notwendig werden, die Prozedur für die Zentrierung öfter durchzuführen.
Referenzmatrix und Zentriermatrix werden meist auf ein separates Blech oder einer Platte angeordnet, weil die Ebenheit wichtig für die Genauigkeit des Abgleiches ist. Eventuelle Abweichungen von der Ebenheit des Bleches oder der Platte sind neue mögliche Fehlerquellen für das System.

Der Begriff der Werkstoffbearbeitungsebene bezeichnet die Fläche über dem Materialbearbeitungstisch, in welcher der Fokus des Laserstrahls auf das Werkstück einwirkt. Diese Ebene kann bei Werkstücken mit abgestuftem Oberflächenprofil auch aus mehreren Flächen über dem Niveau des Materialbearbeitungstisches bestehen oder sogar aus dazu geneigten Flächen. Vorraussetzung für eine Bearbeitung derartiger Werktücke ist eine Beweglichkeit des Laserbearbeitungskopfes senkrecht zum Materialbearbeitungstisch. Der Begriff Laserbearbeitungskopf wird hier in Abgrenzung zum Begriff Laserkopf benutzt, der häufig die reine Laserquelle bezeichnet. In diesem Falle ist aber immer der mit einer Fokussieroptik ausgestattete Bearbeitungskopf gemeint.

Als Bearbeitungskontur wird zum einen die Anordnung der Punkte oder Linien bezeichnet, welche in den CAD-Daten hinterlegt ist, andererseits wird sie durch den Vorgang des Laserschneidens durch den Weg des Lasers auf das Werkstück ausgeprägt. Im Falle des Lasergravierens kann die Bearbeitungskontur auch die Anordnung der zu gravierenden Zeichen bezeichnen.

Eine vorteilhafte Ausgestaltung der Erfindung besteht darin, dass die Referenzmatrix und die Zentrierpunkte auf einer Referenzplatte in der Werkstoffbearbeitungsebene ausgebildet sind. Gegebenenfalls können die Zentrierpunkte auch auf einer separaten Zentrierplatte angeordnet sein.

Es ist für die Praxis von besonderem Vorteil, dass die Bearbeitungskontur aus CAD-Daten importiert oder an der Bearbeitungsmaschine erstellt wird und dass mehrere Bearbeitungskonturen auf das entzerrte und skalierte Abbild des Werkstückes projiziert werden können. In diesem Stadium besteht die Möglichkeit, weitere Positionskorrekturen oder eine Verschiebung des Startpunktes der Bearbeitung durchzuführen.

Die Erfindung wird vorteilhaft dadurch weitergebildet, dass die Größe des Bildausschnittes und damit die Genauigkeit der Positionierung durch wählbare Kamera-Objektivkombinationen und eine stufenlose, digitale Zoomfunktion an die Anwendung angepasst werden kann.

Für die Durchführung des Verfahrens ist das Werkzeug als Laserbearbeitungskopf ausgebildet.

Nach einer weiteren Optimierungsmaßnahme ist die Kamera direkt am Laserbearbeitungskopf befestigt.

Die Größe des Kamerabildfeldes setzt sich nach einer Ausgestaltung der Erfindung aus einem oder mehreren Bildern zu einem Gesamtbild zusammen. In der Ausgestaltung des Gesamtbildes aus mehreren Einzelbildern wird es möglich, die hohe Auflösung des einzelnen Kamerabildes für das Gesamtbild zu erreichen.

Eine vorteilhafte Alternative zur Ausgestaltung der Vorrichtung und des mit dieser durchführbaren Verfahrens ergibt sich dadurch, dass die Kamera unabhängig vom Laserbearbeitungskopf im Maschinenarbeitsraum positioniert ist, wobei das Kamerabildfeld einen großen Bereich des Laserarbeitsraums abbildet. Somit kann je nach Anwendungsfall bei Bildern mit ausreichender Auflösung und Genauigkeit die Kamerabildaufnahme vereinfacht werden.

Als besonderer Vorteil der erfinderischen Lösung ist anzuführen, dass sie aufgrund ihrer von der Art der Materialbearbeitung unabhängigen Funktion für eine Vielzahl von Materialbearbeitungsverfahren, wie beispielsweise Gravieren, Fräsen, Ritzen, Sägen oder Brennschneiden eingesetzt werden kann.

Der Erfindung liegt die Konzeption zu Grunde, dass dem Koordinatensystem des Materialbearbeitungstisches, welches mit dem Steuerprogramm des Laserbearbeitungskopfes verbunden ist, ein kameragestütztes Koordinatensystem hinzufügt wird, welches durch das beschriebene Verfahren entzerrt, skaliert und zentriert wird. Durch die somit erreichte Möglichkeit einer Transformation zwischen den beiden Koordinatensystemen kann die zu schneidende Geometrie direkt auf die Abbildung des Werkstückes projiziert und der Vorgang des Positionierens in Echtzeit per Kamera überwacht werden.

Das beschriebene Verfahren führt zu Verbesserungen gegenüber Lösungen aus dem Stand der Technik, indem das System den Einrichtaufwand für die Maschinen und Werkzeuge erheblich reduziert und eine genaue Positionierung auch bei kleinen Werkstücken ermöglicht. Somit ist die Möglichkeit einer einfachen Positionierung von diversen Ausschnitten auch für Kleinserien oder Prototypen gegeben. Schließlich können auch Restbleche optimal ausgenutzt und zeitsparend verarbeitet werden.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Korrektur von Abbildungsfehlern,
- Fig. 2:: Zentrierung des Mittelpunktes der Kamera,
- Fig. 3:: Projektion und Positionierung der Schneidekontur auf das Werkstück,
- Fig. 4:: Ausführungsbeispiel 1: Kameraposition am Laserbearbeitungskopf,
- Fig. 5:: Ausführungsbeispiel 2: Kameraposition am Laserbearbeitungskopf mit aus Einzelbildern zusammengesetztem Gesamtbild und
- Fig. 6:: Ausführungsbeispiel 3: Kameraposition im Maschinenarbeitsraum.

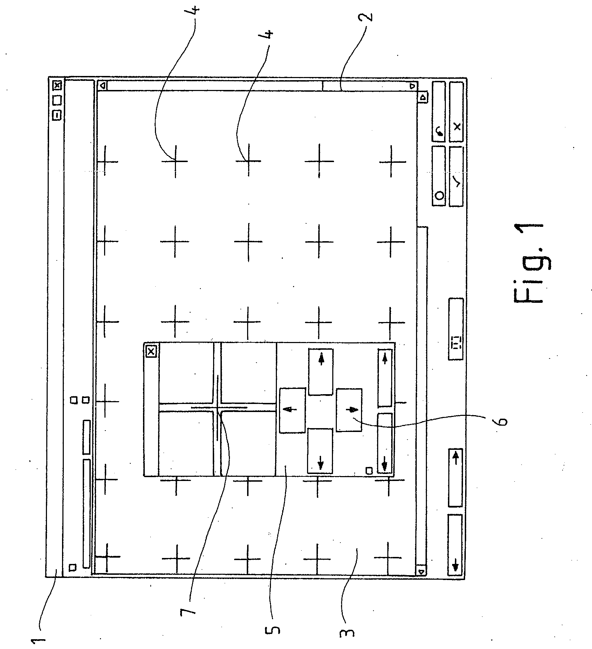

Figur 1 zeigt die Bildschirmausgabe eines Steuerprogramms 1 während der Korrektur der Kameraverzerrung, wobei im Kontrollfenster 2 eine Referenzmatrix 3 in Form von gleichmäßig zueinander beabstandeten Skalierkreuzen 4 auf einer Referenzplatte wiedergegeben wird. Ein Zentrierfenster 5 mit einem eingeblendeten Ziel kreuz 7 wird bevorzugt über Cursor-Tasten 6 exakt auf einen ausgewählten Bezugspunkt der Referenzmatrix 3, welcher als Skalierkreuz 4 ausgebildet ist, positioniert. Indem mehrere Skalierkreuze 4 der Referenzmatrix 3 nacheinander mit dem Zielkreuz 7 des Kamerabildes in Übereinstimmung gebracht werden, wird die Verzerrung des Kamerabildes, insbesondere im Außenbereich, korrigiert. Mit Hilfe dieser Korrekturfunktion wird die Verzerrung der Kamerabilder für alle folgenden Aufnahmen von Werkstücken korrigiert.

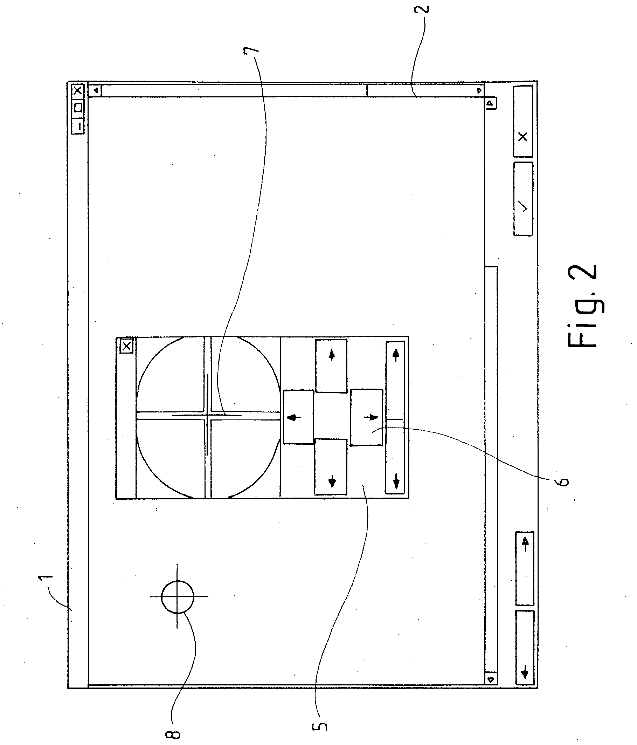

Figur 2 stellt die Bildschirmausgabe des Steuerprogramms 1 während der Zentrierung des Mittelpunktes des Kamerabildes dar, wobei im Kontrollfenster 2 das Zentrierfenster 5 mit dem Zielkreuz 7 über Cursor-Tasten 6 exakt auf einem der als Zentrierpunkt 8 ausgebildeten Referenzpunkte einer Zentrierplatte ausgerichtet wird. Nach dem Anfahren des ersten Zentrierpunktes 8 wird ein zweiter Zentrierpunkt 8 angefahren, der links unterhalb davon liegt und schließlich ein dritter Zentrierpunkt 8 rechts oberhalb vom ersten. Mit diesem Verfahrensschritt wird das Zentrum des Kamerabildes mit dem Zentrum des Lasers in Übereinstimmung gebracht.

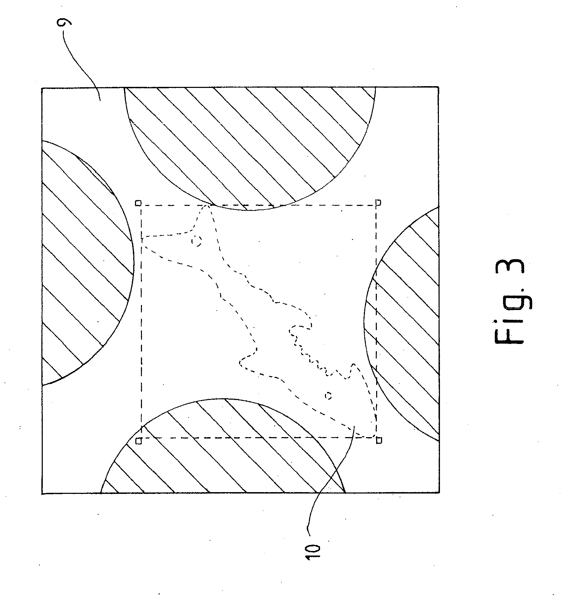

In Figur 3 wird die Bildschirmausgabe des Steuerprogramms 1 dargestellt, in der die zuvor erstellte oder importierte Bearbeitungskontur 10 auf einen Abbild des Werkstückes 9 projiziert wird. Mittels stufenloser, digitaler Zoomfunktion können weitere Positionskorrekturen durchgeführt oder auch weitere Bearbeitungskonturen 10 hinzugefügt werden. In dieser Ansicht ist das skalierte, zentrierte und entzerrte Kamerabild als Hintergrund für die Bearbeitungskontur 10 dargestellt. Die Bearbeitungskontur 10, im Beispiel als Umriss eines Haies, ist somit exakt zwischen den Ausschnitten im Werkstück 9 auf dem Blech positionierbar. Verschiebungen der Bearbeitungskontur können somit fehlerfrei vorgenommen werden, da die optisch nicht vollständig korrigierbaren Kamerabildfehler durch die vorangegangenen Verfahrensschritte softwareseitig korrigiert wurden.

Die folgenden Figuren zeigen mögliche Ausführungsbeispiele, die sich hinsichtlich der Kamerabildfelder und Auflösungen sowie der Kamerapositionen innerhalb der Maschine unterscheiden.

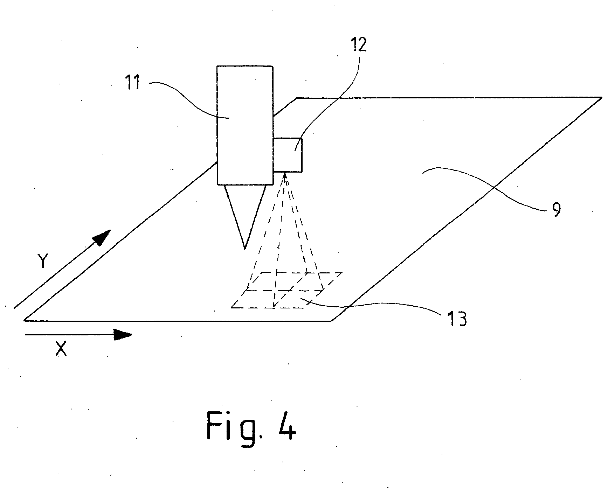

In Figur 4 ist eine Ausführung dargestellt, bei der die Kamera 12 sich direkt am Werkzeug, dem Laserbearbeitungskopf 11, befindet und gemeinsam mit dem Laserbearbeitungskopf 11 bewegt wird. Somit findet keine Relativbewegung zwischen Laserbearbeitungskopf 11 und Kamera 12 statt. Das Kamerabild ist detailreich und hochauflösend auf Grund der Nähe zur Oberfläche des Werkstückes 9. Die Größe des Kamerabildfeldes 13 bewegt sich im Beispiel im Bereich von minimal 15 mm Breite und 20 mm Länge bis maximal 225 mm Breite und 300 mm Länge, einstellbar durch das Objektiv der Kamera. Dabei sind verschiedene Bildgrößen und Auflösungskombinationen wählbar. Die maximale Auflösung beträgt im dargestellten bevorzugten Ausführungsbeispiel zirka acht µm/Pixel. Das Kamerabildfeld 13 befindet sich in Figur 4 in einer x-y-Ebene, wobei auch das Werkstück 9 als Blech in dieser Ebene angeordnet ist.

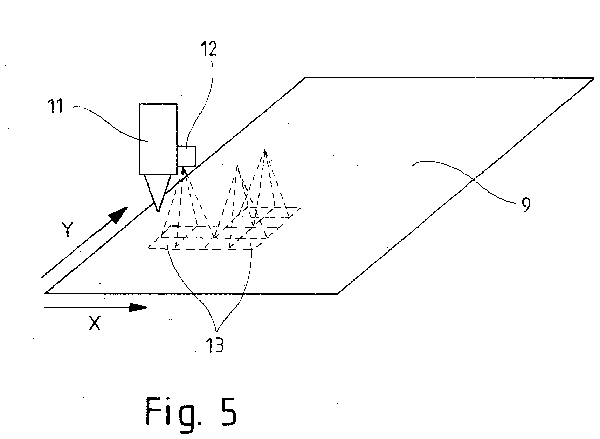

Figur 5 zeigt eine Ausführung der Anbringung der Kamera 12 am Laserbearbeitungskopf 11, analog zu Figur 4. Die Größe des Gesamtbildes setzt sich jedoch zusammen aus einer Vielzahl von einzelnen Kamerabildfeldern 13, die zu einem Gesamtbild zusammengesetzt werden. Die erreichbare Maximalauflösung des Gesamtbildes in µm/Pixel entspricht der in Figur 4 gewählten Einzelbildauflösung. Die Größe des Gesamtbildes ist dann nur durch den Arbeitsraum der Maschine limitiert. Mit dieser Ausgestaltung sind somit auch große Werkstücke 9, insbesondere große Bleche, mit hoher Auflösung bearbeitbar, wobei auch eine Vielzahl von kleineren Bearbeitungskonturen auf dem gesamten Werkstück 9 vor dem Start der Bearbeitung angeordnet werden können. Die Bearbeitung kann dann von dem Laser für das gesamte Werkstück in einem Prozessschritt vorgenommen werden.

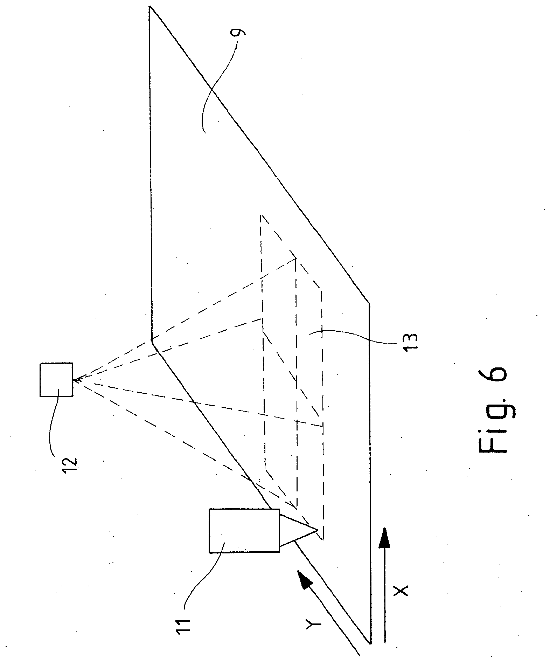

In Figur 6 ist eine Konfiguration dargestellt, bei der die Kamera 12 unabhängig vom Laserbearbeitungskopf 11 im Maschinenarbeitsraum angeordnet ist. Das Kamerabildfeld 13 bildet einen großen Bereich des Laserarbeitsraums ab, wobei es vorzugsweise eine Größe von maximal 500 mm mal 500 mm Kantenlänge aufweist und eine maximale Auflösung von zirka 175 µm/Pixel besitzt.

### LISTE DER BEZUGSZEICHEN

- 1: Steuerprogramm
- 2: Kontrollfenster
- 3: Referenzmatrix auf Referenzplatte
- 4: Skalierkreuz
- 5: Zentrierfenster
- 6: Cursor-Tasten
- 7: Zielkreuz
- 8: Zentrierpunkt,
- 9: Werkstück
- 10: Bearbeitungskontur
- 11: Laserbearbeitungskopf
- 12: Kamera
- 13: Kamerabildfeld

## Patentansprüche

1. Verfahren zur Steuerung eines Werkzeuges, **gekennzeichnet durch** die folgenden Verfahrensschritte:
- Bereitstellen einer Referenzmatrix (3) aus Bezugspunkten, wobei die Referenzmatrix als regelmässiges Muster von Bezugspunkten in exakt definierten Abständen in rechtwinkelig zueinander angeordneten Zeilen und Spalten angeordnet ist und einer Zentriermatrix aus Zentrierpunkten (8) in einer Werkstoffbearbeitungsebene, wobei die Zentriermatrix definiert ist als Markierung, die in exakt definierten Abständen zu zwei rechtwinklig zueinander angeordneten Seiten auf einem stabilen Träger angeordnet ist, und die Zentrierpunkte dazu angebracht sind um die Beziehung des Werkzeugs zur Kamera herzustellen,
- Abbilden der Werkstoffbearbeitungsebene mit Hilfe einer Kamera (12) als Kamerabild in der Größe des Kamerabildfeldes (13),
- Entzerren des Kamerabildes der Werkstoffbearbeitungsebene durch Abgleich mit der Referenzmatrix (3),
- Skalieren der Pixelgröße des Kamerabildes durch Abgleich mit der Referenzmatrix (3),
- Zentrieren des Kamerabildes durch Abgleich mit den Zentrierpunkten (8),
- Projizieren einer Bearbeitungskontur (10) auf das entzerrte und skalierte Kamerabild eines Werkstückes (9) und
- Ausrichten der Bearbeitungskontur (10) auf dem Kamerabild des Werkstückes (9) sowie Start der Bearbeitung, wobei die Bearbeitung des Werkstückes (9) durch das Werkzeug entlang der Bearbeitungskontur (10) erfolgt,
wobei das Werkzeug als Laserbearbeitungskopf (11) ausgebildet ist und die Kamera (12) einen von der Laseroptik des Laserbearbeitungskopfes (11) separaten Strahlengang ausbildet.

2. Verfahren nach Anspruch 1, **dadurch gekennzeichnet, dass** die Referenzmatrix (3) und die Zentriermatrix auf einer Referenzplatte in der Werkstoffbearbeitungsebene ausgebildet ist.

3. Verfahren nach Anspruch 1 oder 2, **dadurch gekennzeichnet, dass** die Bearbeitungskontur (10) aus CAD-Daten importiert oder an der Bearbeitungsmaschine erstellt wird.

4. Verfahren nach einem der Ansprüche 1 bis 3, **dadurch gekennzeichnet, dass** mehrere Bearbeitungskonturen (10) auf das entzerrte und skalierte Abbild des Werkstückes (9) projiziert werden.

5. Verfahren nach einem der Ansprüche 1 bis 4, **dadurch gekennzeichnet, dass** die Größe des Kamerabildfeldes (13) und die Genauigkeit der Positionierung durch wählbare Kamera-Objektivkombinationen an die Anwendung angepasst wird.

6. Verfahren nach einem der Ansprüche 1 bis 5, **dadurch gekennzeichnet, dass** die Kamera (12) am Laserbearbeitungskopf (11) befestigt ist.

7. Verfahren nach einem der Ansprüche 1 bis 6, **dadurch gekennzeichnet, dass** die Größe des Kamerabildfeldes (13) aus einer bestimmten Anzahl von Bildern zu einem Gesamtbild zusammengesetzt wird.

8. Verfahren nach einem der Ansprüche 1 bis 7, **dadurch gekennzeichnet, dass** die Kamera (12) unabhängig vom Laserbearbeitungskopf (11) im Maschinenarbeitsraum positioniert wird.

9. Verfahren nach einem der Ansprüche 1 bis 8, **dadurch gekennzeichnet, dass** die Werkstoffbearbeitung als Gravieren, Fräsen, Ritzen, Sägen oder Brennschneiden ausgebildet ist.

## Claims

1. A method for controlling a tool, **characterized by** the following method steps:
- Providing a reference matrix (3) of reference points, wherein the reference matrix (3) is disposed as a regular pattern of reference points at precisely defined spacing in lines and columns disposed perpendicular to each other, and
a centering matrix of centering points (8) in a material processing plane, wherein the centering matrix is defined as a marking disposed at precisely defined spacing from two sides disposed perpendicular to each other on a stable support, and the centering points are applied for establishing the relationship of the tool to a camera,
- imaging the material processing plane by means of a camera (12) as a camera image the size of the camera image field (13),
- equalizing the camera image of the material processing plane by comparing with the reference matrix (3),
- scaling the pixel size of the camera image by comparing with the reference matrix (3),
- centering the camera image by comparing with the centering points (8),
- projecting a processing contour (10) onto the equalized and scaled camera image of a workpiece (9), and
- aligning the processing contour (10) to the camera image of the workpiece (9) and starting processing, wherein the processing of the workpiece (9) by the tool occurs along the processing contour (10),
wherein the tool is implemented as a laser processing head (11) and the camera (12) implements a separate beam path from the laser optics of the laser processing head (11).

2. The method according to claim 1, **characterized in that** the reference matrix (3) and the centering matrix are implemented on a reference plate in the material processing plane.

3. The method according to claim 1 or 2, **characterized in that** the processing contour (10) is imported from CAD data or created on the machine tool.

4. The method according to any one of the claims 1 through 3, **characterized in that** a plurality of processing contours (10) are projected onto the equalized and scaled image of the workpiece (9).

5. The method according to any one of the claims 1 through 4, **characterized in that** the size of the camera image field (13) and the precision of positioning are adapted to the application by means of selectable camera objective combinations.

6. The method according to any one of the claims 1 through 5, **characterized in that** the camera (12) is mounted on the laser processing head (11).

7. The method according to any one of the claims 1 through 6, **characterized in that** the size of the camera image field (13) is assembled into an overall image from a particular number of images.

8. The method according to any one of the claims 1 through 7, **characterized in that** the camera (12) is positioned independently of the laser processing head (11) in the machine workspace.

9. The method according to any one of the claims 1 through 8, **characterized in that** the material processing is implemented as engraving, milling, scribing, sawing, or thermal cutting.

## Revendications

1. Procédé de commande d'un outil **caractérisé par** les étapes suivantes :
- Préparation d'une matrice de référence (3) à partir de points de référence, la matrice de référence étant agencée sous forme de modèle régulier de points de référence à intervalles définis avec précision dans des lignes et colonnes disposées à angles droits
et
d'une matrice de centrage à partir de points de centrage (8) dans un plan d'usinage du matériau, la matrice de centrage étant définie en tant que marquage disposé sur un support stable à intervalles définis avec précision par rapport à deux côtés disposés à angles droits et les points de centrage étant appliqués dessus afin d'établir un lien entre l'outil et la caméra,
- Représentation du plan d'usinage du matériau à l'aide d'une caméra (12) sous la forme d'une image caméra de la taille du champ correspondant (13),
- Correction de l'image caméra du plan d'usinage du matériau par comparaison avec la matrice de référence (3),
- Mise à l'échelle de la taille des pixels de l'image caméra par comparaison avec la matrice de référence (3),
- Centrage de l'image caméra par comparaison avec les points de centrage (8),
- Projection d'un contour d'usinage (10) sur l'image caméra corrigée et mise à l'échelle d'une pièce à usiner (9) et
- Alignement du contour d'usinage (10) sur l'image caméra de la pièce à usiner (9) et démarrage de l'usinage, l'usinage de la pièce à usiner (9) étant réalisé par l'outil le long du contour d'usinage (10),
l'outil étant constitué d'une tête d'usinage laser (11) et la caméra (12) présentant une trajectoire de faisceau distincte de l'optique laser de la tête d'usinage laser (11).

2. Procédé selon la revendication 1, **caractérisé en ce que** la matrice de référence (3) et la matrice de centrage sont disposées sur une plaque de référence dans le plan d'usinage du matériau.

3. Procédé selon la revendication 1 ou 2, **caractérisé en ce que** le contour d'usinage (10) est importé depuis les données de CAO ou bien créé sur la machine d'usinage.

4. Procédé selon l'une des revendications 1 à 3, **caractérisé en ce que** plusieurs contours d'usinage (10) sont projetés sur la représentation corrigée et mise à l'échelle de la pièce à usiner (9).

5. Procédé selon l'une des revendications 1 à 4, **caractérisé en ce que** la taille du champ de l'image caméra (13) et la précision du positionnement via les combinaisons caméra-objectif sélectionnables sont adaptées à l'application.

6. Procédé selon l'une des revendications 1 à 5, **caractérisé en ce que** la caméra (12) est fixée sur la tête d'usinage laser (11).

7. Procédé selon l'une des revendications 1 à 6, **caractérisé en ce que** la taille du champ de l'image caméra (13) est constituée d'un nombre donné d'images regroupées en une image commune.

8. Procédé selon l'une des revendications 1 à 7, **caractérisé en ce que** la caméra (12) est positionnée dans la zone de travail de la machine indépendamment de la tête d'usinage laser (11).

9. Procédé selon l'une des revendications 1 à 8, **caractérisé en ce que** l'usinage du matériau intervient sous forme de gravage, fraisage, rayage, sciage ou oxycoupage.
